# FASCICULE DE BREVET EUROPEEN

(11) **EP 2 965 790 B1**
(45) Date de publication et mention de la délivrance du brevet: **07.12.2016**
(21) Numéro de dépôt: 15175334.0
(22) Date de dépôt: 03.07.2015
(51) Int. Cl.: A63C 5/06, A63C 5/075, F16F 9/516, F16F 9/20

(54) **PLANCHE DE GLISSE EQUIPÉ D'UN DISPOSITIF AMORTISSEUR**
GLEITBRETT, DAS MIT EINER DÄMPFUNGSVORRICHTUNG AUSGESTATTET IST
SLIDING BOARD EQUIPPED WITH A DAMPING DEVICE

(30) Priorité: 09.07.2014 FR 1456594
(43) Date de publication de la demande: 13.01.2016
(73) Titulaire: Skis Rossignol, 38430 Saint-Jean de Moirans (FR)
(72) Inventeur: PUGET, Nicolas, 73470 Novalaise (FR); MOENNE LOCCOZ, Arnaud, 38430 Moirans (FR); TALON, Benjamin, 46000 Cahors (FR); CHABRERIE, Yan, 19490 Sainte Fortunade (FR)
(74) Mandataire: Cabinet Laurent & Charras

(56) Documents cités:
- EP-A1- 2 138 208
- WO-A1-03/041819
- FR-A- 1 228 793
- FR-A- 1 407 710

## Description

### Domaine technique

L'invention se rattache au domaine des sports de glisse. Elle concerne plus spécifiquement des agencements particuliers destinés à assurer l'amortissement des mouvements de l'extrémité avant d'une planche de glisse. Elle concerne plus particulièrement les planches équipées de dispositifs d'amortissement de type hydraulique. Bien que plus particulièrement décrite pour son application à un ski alpin, l'invention couvre également d'autres types de planches telles que notamment les surfs des neiges

### Techniques antérieures

De manière générale, on sait que l'extrémité avant d'un ski est sujette à de nombreux phénomènes de vibrations. Ces vibrations sont dues au fait que le ski évolue sur une surface qui présente des obstacles, qui font se relever l'extrémité du ski du fait de sa relative souplesse. La gravité a, quant à elle, tendance à tirer l'extrémité du ski vers le bas provoquant donc des phénomènes oscillatoires.

Ces phénomènes oscillatoires peuvent se prolonger plus ou moins dans le temps en fonction des propriétés mécaniques du ski en particulier sa raideur et son amortissement.

On conçoit que ces phénomènes de battement ne sont pas propices à une bonne conduite de la planche, et il a donc été largement proposé des dispositifs amortissants qui permettent de limiter l'amplitude, et surtout la durée des phénomènes vibratoires de l'extrémité avant de la planche.

Une solution intéressante a été proposée dans le document FR 1 407 710, qui décrit un ski équipé d'un système amortisseur comprenant un bras dont une extrémité est solidaire d'un point fixe de la zone avant du ski. La partie arrière de ce bras est solidaire d'un dispositif hydraulique comportant un piston, dont le mouvement est assuré par le bras en fonction de la déformation du ski.

Ainsi, le mouvement vers le haut ou vers le bas de l'extrémité avant du ski sont freinés identiquement par l'action du vérin hydraulique.

Le comportement symétrique de cet amortissement, pour les mouvements vers le haut ou vers le bas n'est pas totalement satisfaisant. En effet, si cet amortissement est trop important, il a tendance à gêner les mouvements de l'extrémité de la planche vers le bas, qui tarde donc à retrouver une position au contact du sol. A l'inverse, lorsque cet amortissement est trop faible, les mouvements de la planche vers le haut ne sont pas suffisamment freinés.

En d'autres termes, on conçoit qu'il est nécessaire de réaliser un compromis dans le choix de la valeur de l'amortissement, pour avoir un comportement différencié selon que les mouvements amortis s'effectuent vers le haut ou vers le bas.

Un système plus intégré a été décrit dans le document US 7 296 818, mais qui fonctionne selon un principe similaire, mais avec les mêmes inconvénients.

### Exposé de l'invention

L'invention vise donc à optimiser le comportement d'une planche de glisse en ce qui concerne l'amortissement des mouvements de l'extrémité de la planche, de manière en particulier à faciliter la conduite de la planche.

L'invention concerne donc une planche de glisse équipée d'un système amortisseur des mouvements verticaux de la zone avant ou arrière de la planche. Ce système comprend un bras dont une première extrémité est solidaire d'un point d'attache solidaire de la zone avant ou arrière de la planche, et une deuxième extrémité qui est solidaire d'un piston d'un dispositif hydraulique reliée à la planche à proximité de la fixation. Ce dispositif hydraulique exerce un effort de retenue lors du mouvement de la seconde extrémité du bras, afin de dissiper une partie de l'énergie cinétique de la zone avant ou arrière de la planche transmise par le bras.

Conformément à l'invention, cette planche est caractérisée en ce que lorsque le mouvement du bras est consécutif à un mouvement du point d'attache vers le bas, le dispositif hydraulique exerce un effort de retenue qui est inférieur à celui qui est exercé lorsque le mouvement du bras est consécutif à un mouvement du point d'attache vers le haut.

Autrement dit, l'invention consiste à équiper la planche d'un dispositif amortisseur qui a un comportement asymétrique, et qui amortit donc plus les mouvements de la spatule vers le haut, et au contraire amortit faiblement les mouvements de la spatule vers le bas. De façon classique, l'effort de retenue d'un tel type d'amortisseur hydraulique est au premier ordre, proportionnel à la vitesse de déplacement du bras. En d'autres termes, cet amortissement est plus fort pour les mouvements de flexion de la planche, lorsque la planche se cintre avec sa spatule remontant vers le haut, par rapport au mouvement de contre-flexion correspond à la déformation en sens inverse. Bien entendu, le même système amortisseur peut être installé à l'arrière de la planche pour limiter les mouvements du talon, avec les adaptations dimensionnelles correspondantes.

Ainsi, une planche de glisse conforme à l'invention présente un comportement amélioré, puisque les mouvements de la spatule vers le haut sont relativement limités, alors que les mouvements inverses visant à plaquer la spatule sur la neige sont moins amortis, et donc permettent un retour de la planche au contact de la neige plus rapide.

Avantageusement en pratique, pour un ski, le dispositif hydraulique est disposé à l'avant de la butée de la fixation, ce qui permet d'une part, de limiter l'ajout de poids supplémentaire sur la partie extrême avant du ski, tout en augmentant la longueur du bras de transmission des mouvements de l'extrémité avant. Il également est envisageable que le dispositif hydraulique soit disposé en dessous de la fixation du ski, par exemple à l'intérieur d'une plateforme appropriée. Pour limiter l'encombrement du dispositif hydraulique, on peut envisager de l'intégrer au moins partiellement à l'intérieur de la structure du ski. De façon préférentielle, l'extrémité avant du bras sera positionnée dans une zone où l'amplitude des déformations est importante, et on privilégiera les ventres des modes principaux de vibration. La zone proche de la ligne de contact avant est privilégiée pour bénéficier de la plus grande longueur de bras. Il est également possible d'installer l'extrémité avant au niveau de la spatule.

Dans une forme particulière de réalisation, le système amortisseur peut inclure un mécanisme de démultiplication, à base de biellettes ou analogue, permettant d'augmenter la course de l'extrémité arrière du bras, coopérant avec le dispositif hydraulique. De préférence, on ajoutera ce type de mécanisme le plus à loin possible de l'extrémité où est localisée le point d'attache, pour éviter de générer un surpoids au niveau de cette extrémité de la planche.

Pour limiter l'influence du système amortisseur sur la raideur en flexion de la planche, on privilégiera les solutions dans lesquelles la première extrémité du bras est reliée à la zone avant de la planche par une liaison pivot, ainsi que celles dans lequel le dispositif hydraulique est relié à la face supérieure de la planche également par une liaison pivot. Cela permet en particulier de créer uniquement un déplacement en translation longitudinale pure, sans composante parasite verticale ou de flexion.

Une solution particulière concernant le dispositif hydraulique consiste à employer un dispositif qui comporte une chambre principale, à l'intérieur de laquelle peut se déplacer le piston, ce piston séparant cette chambre principale en une chambre de compression et une chambre de détente.

Ce dispositif comporte deux chemins hydrauliques indépendants connectant la chambre de compression et la chambre de détente, ces deux chemins ayant des sens de circulation opposés et des pertes de charge différentes.

En d'autres termes, le mouvement de flexion induit la circulation du fluide du dispositif hydraulique de la chambre de compression vers la chambre de détente, par un premier chemin hydraulique, tandis que le mouvement de contre-flexion provoque le mouvement du fluide de la chambre de détente à la chambre de compression, par un second chemin hydraulique différent, présentant des caractéristiques de débit différentes, et donc un amortissement différent.

En pratique, la sélection du chemin hydraulique actif pour l'un et l'autre des mouvements se fait grâce à la présente de clapets anti-retour installés sur chacun des chemins hydrauliques, ces clapets étant montés en sens opposé.

La différence d'amortissement entre les deux mouvements peut être obtenue par l'emploi de réducteurs de débits de sections différentes, implantés sur chacun des chemins hydrauliques.

Ces réducteurs de débit peuvent être avantageusement réalisés par des pointeaux qui sont préférentiellement réglables, de manière à permettre un ajustement des amortissements optimaux pour les deux mouvements caractéristiques.

Selon une variante de réalisation du dispositif hydraulique, celui-ci peut comporter
- une chambre principale, à l'intérieur de laquelle peut se déplacer le piston, ledit piston séparant ladite chambre principale en une chambre de compression et une chambre de détente, ledit piston étant percé par un canal hydraulique reliant les chambres de compression et de détente ;
- une chambre complémentaire de volume variable, reliée à la chambre de compression par un clapet anti retour et une restriction hydraulique.

Dans cette configuration, le déplacement du piston à l'intérieur de la chambre principale conduit à une circulation du fluide entre la chambre de compression et la chambre de détente d'une part, mais aussi entre la chambre de compression et la chambre complémentaire qui lui est hydrauliquement reliée. La liaison hydraulique entre la chambre de compression et la chambre complémentaire se fait par deux chemins distincts, ayant des comportements différents selon le sens de circulation du fluide. Ainsi, le clapet anti retour ne s'ouvre que dans un seul sens de circulation du fluide, tandis que la restriction hydraulique est parcourue par un débit similaire dans les sens de circulation du fluide.

Dans une forme particulière de réalisation, le dispositif hydraulique comporte un mécanisme permettant de régler le diamètre de la restriction hydraulique. Dans ces conditions, il est possible de régler le débit circulant dans un sens ou dans l'autre entre la chambre complémentaire et la chambre de compression, de sorte qu'on règle la valeur de l'amortissement engendré par le mouvement du piston.

Selon une variante de réalisation, la chambre principale peut être reliée à une chambre de compensation agencée pour recevoir le fluide de la chambre principale sous l'effet de la température.

En effet, la planche étant destinée à évoluer dans une plage large de températures ambiantes, le fluide occupant la chambre principale peut être amené à se dilater et se retrouve alors dans une chambre de compensation formant un volume supplémentaire sans influence sur les mouvements de circulation de fluide. Parallèlement, le fluide déplacé par le piston peut s'échauffer lorsque le système est fortement sollicité, et peut donc se dilater. De même, les variations d'altitude auxquelles est soumise la planche peuvent provoquer des dilatations des fractions gazeuses dissoutes dans le fluide, encaissées par la chambre de compensation.

En pratique, cette chambre de compensation peut comporter un piston associé à des moyens de rappel exerçant un effort de l'ordre de celui exercé par la dilatation du fluide.

Selon une autre caractéristique de l'invention, le système amortisseur peut comporter des moyens de limitation de la course du bras en cas de mouvement du point fixe vers le bas. En d'autres termes, le système amortisseur peut être relié de telle sorte que le mouvement de la spatule vers le bas est bloqué lorsque la spatule atteint une position optimale, correspondant sensiblement à la position où elle est en contact avec la neige.

En d'autres termes, on évite que les mouvements de la spatule vers le bas ne puissent se prolonger de façon exagérée, et entretenir des oscillations pouvant perturber la conduite de la planche.

Différents modes de réalisation sont envisageables pour assurer cet effet de limitation de la course du bras. Ainsi, dans une première variante, la limitation est provoquée par la présence d'une butée montée sur le bras, cette butée venant au contact d'une portion fixe du dispositif hydraulique lors du déplacement du bras. Autrement dit, le mouvement du bras est bloqué dans une direction, par la présence d'un organe venant buter contre le dispositif hydraulique, et en particulier le boitier externe du dispositif hydraulique.

Il est également possible que la limitation soit provoquée par une butée montée à l'intérieur de la chambre principale délimitant la course du piston en cas de mouvements du point fixe vers le bas.

Autrement dit, dans ce cas, c'est le piston qui joue le rôle de butée en venant au contact du fond de la chambre du dispositif hydraulique. Dans un autre mode de réalisation, cette butée peut être de nature hydraulique, pour amortir plus en douceur la fin de course du bras. Cette configuration génère un effort de retenue supplémentaire qui est proportionnel à la vitesse et au déplacement du bras.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est une vue de dessus d'un ski conforme à l'invention.
Les figures 2 et 3 sont des vues de côté du ski de la figure 1, montré dans deux configurations de flexion différente.
Les figures 4 à 7 sont des vues en coupe selon un plan horizontal d'un premier mode de réalisation du dispositif hydraulique, montré dans quatre positions différentes.
La figure 8 est une vue en coupe longitudinale selon un plan vertical du dispositif hydraulique des figures 4 à 7.
La figure 9 est une vue en coupe analogue aux figures 4 à 7, montrant une variante de réalisation du principe de limitation du déplacement du bras.
La figure 10 est une vue en perspective sommaire d'un système amortisseur équipé d'un dispositif hydraulique selon 1 second mode de réalisation.
La figure 11 est une vue en coupe longitudinale du dispositif hydraulique de la figure 10, avec illustration des circulations de fluide lors d'un mouvement de flexion de la planche.
La figure 11a est une vue identique à la figure 11, avec illustration des circulations de fluide lors d'un mouvement de contre-flexion de la planche.
Les figures 12 et 13 sont des vues en coupe transversale selon les plans XII-XII', et XIII-XIII' de la figure 11.

### Description détaillée

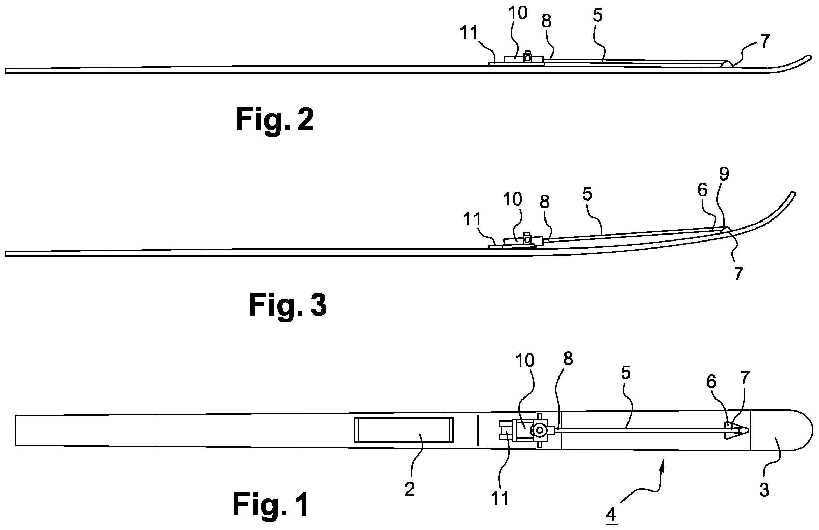

Comme illustré schématiquement à la figure 1, un ski conforme à l'invention **1** comporte une zone **2** dans laquelle est implantée la fixation, matérialisée par une plateforme.

Ce ski comporte également une extrémité avant **3** ou spatule susceptible de se déplacer vers le haut ou vers le bas en fonction de la raideur en flexion de la planche, et des obstacles rencontrés sur son trajet.

Conformément à l'invention, le ski **1** comporte un dispositif amortisseur 4. Ce dispositif 4 se compose principalement d'un bras **5** s'étendant longitudinalement, et dont l'extrémité avant **6** est reliée à une platine **7** montée fixe sur la face supérieure du ski, à proximité de la spatule. En pratique, la longueur du bras peut être de l'ordre 500 à 700 mm, induisant un déplacement de son extrémité arrière de 2 à 5 mm environ. Dans le cas de l'utilisation d'un mécanisme de démultiplication, ce déplacement peut être supérieur, et de l'ordre de 10 mm. On notera que plus le bras est long, plus l'efficacité de l'amortisseur est optimisée. L'axe transversal est de préférence positionné à proximité de la ligne de contact avant, défini dans la norme ISO 6289, et typiquement entre 20 et 60 millimètres de ce point.

L'extrémité arrière **8** du bras **5** coopère quant à elle avec un dispositif hydraulique **10** qui est solidaire de la face supérieure du ski par l'intermédiaire d'une platine **11.** Plus précisément, et comme illustré aux figures 2 et 3, l'extrémité avant **6** du bras **5** est montée en rotation autour d'un axe de pivotement **9,** orienté transversalement par rapport au ski sur une chape **8** solidaire de l'embase **7** elle-même fixée sur la face supérieure de la planche.

Ceci permet au bras **5** de se déplacer plus librement lors des mouvements de flexion du ski, tel qu'illustré à la figure 3. Complémentairement, le dispositif hydraulique **10** est monté également avec un axe de pivotement par rapport à la platine **11,** ce qui lui permet, comme illustré à la figure 3, de se décoller de la face supérieure du ski dans le cas de flexion du ski, en laissant le bras **5** se mouvoir à l'intérieur du dispositif hydraulique **10.**

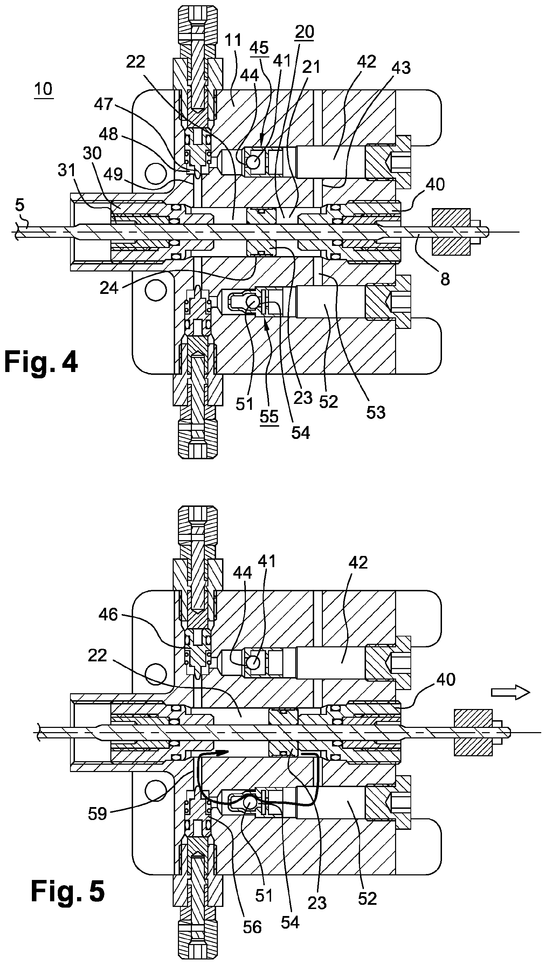

Un mode de réalisation particulier du dispositif hydraulique **10,** est illustré à la figure 4.

De manière simplifiée, ce dispositif hydraulique **10** comprend un corps **11** à l'intérieur duquel est définie une chambre principale **20,** à l'intérieur de laquelle peut se déplacer un piston **23.** La chambre principale **20** est composée de deux chambres séparées par le piston **23,** à savoir une chambre de compression 21 et une chambre de détente **22.** Ce piston **23** est équipé d'un joint d'étanchéité **24** permettant d'assurer une étanchéité entre la chambre de compression **21** et la chambre de détente **22.** La chambre est remplie d'un fluide hydraulique, en particulier d'une huile hydraulique basse température, dont les propriétés de viscosité ne sont pas trop fortement modifiées sur la plage de fonctionnement du ski.

La chambre principale **20** est obturée vers l'avant par un mécanisme de bouchon **30,** présentant une ouverture **31** en son centre, permettant de laisser passer l'extrémité de l'axe arrière **8** du bras **5.**

Le bras **5** traverse longitudinalement les chambres de compression et de détente et le piston **23** est fixé rigidement sur la tige du bras **5.** Le bras **5** et l'extrémité **8** interne à l'amortisseur hydraulique peuvent être monobloc ou reliés par une liaison mécanique rigide, éventuellement réglable en translation longitudinale, par exemple par un système de type vis-écrou pour régler la longueur du bras **5** et agir sur le relevé de la spatule du ski.

Des moyens d'étanchéité **26** sont prévus pour permettre la translation du bras **5** au travers du bouchon **30,** et donc le déplacement du piston **23.**

Du côté arrière, la chambre principale est obturée par un système de bouchon analogue, autorisant le passage de l'extrémité arrière **8** du bras **5,** le bras pouvant éventuellement sortir du boitier de l'amortisseur du côté arrière en direction de la fixation de ski **2** Cet amortisseur à tige traversante présente l'avantage de ne pas avoir à compenser de volume de tige. La pression sur le volume de compensation n'est donc pas influencée par la tige.

Comme illustré à la figure 4, la chambre de compression **21** communique avec une première chambre intermédiaire **42** par l'intermédiaire d'un canal **43.** Cette première chambre intermédiaire **42** communique par l'intermédiaire d'un dispositif anti-retour **45** avec un réducteur de débit **46.** Le dispositif anti-retour **45** est constitué d'une bille **41** qui obstrue ou non l'orifice **44. Il** est agencé de telle sorte que la circulation du fluide est autorisée depuis le réducteur de débit **46** vers la chambre **42** uniquement

Le dispositif de réduction de débit **46** comporte un canal **47** dont le passage du fluide peut être plus ou moins réduit de manière réglable par un pointeau **48.** Le dispositif de réduction de débit **46** communique par l'intermédiaire d'un canal **49** avec la chambre de détente **22.**

Par ailleurs, la chambre de compression **21** communique par l'intermédiaire d'un canal **53** avec une seconde chambre intermédiaire **52.** Cette chambre intermédiaire **52** communique par un dispositif anti-retour **55** avec un réducteur de débit **56.** Le dispositif anti-retour **55** est constitué par la bille **51** qui obstrue ou non l'orifice **54. Il** est agencé de telle sorte que la circulation du fluide est autorisée depuis la chambre **52** vers le réducteur de débit **56** uniquement. Le dispositif de réduction de débit **56** comporte un canal **57** dont le passage du fluide peut être plus ou moins réduit de manière réglable par un pointeau **58.**

Le dispositif de réduction de débit **56** communique par l'intermédiaire d'un canal **59** avec la chambre de détente **22.**

A la figure 4, le piston 23 est représenté dans une position intermédiaire, définissant des chambres de détente et de compression sensiblement de même volume. Les figures 5 à 7 illustrent le fonctionnement du dispositif en fonction des déformations de la planche, et donc du mouvement du bras **5.** Ainsi, dans la configuration illustrée à la figure 5, le piston **23** se déplace en direction de l'arrière, et repousse donc le fluide dans la seconde chambre intermédiaire **52,** le clapet anti-retour **55** laisse passer le fluide jusqu'au réducteur de débit **56** qui est relativement obturé, générant des pertes de charge relativement élevées. Le réducteur de débit **56** permet ainsi au fluide de regagner la chambre de détente **22** par l'intermédiaire du canal **59.**

Dans la configuration illustrée à la figure 5, le piston est arrivé en butée sur le bouchon **40,** de telle sorte que mouvement de la spatule vers le haut est bloqué.

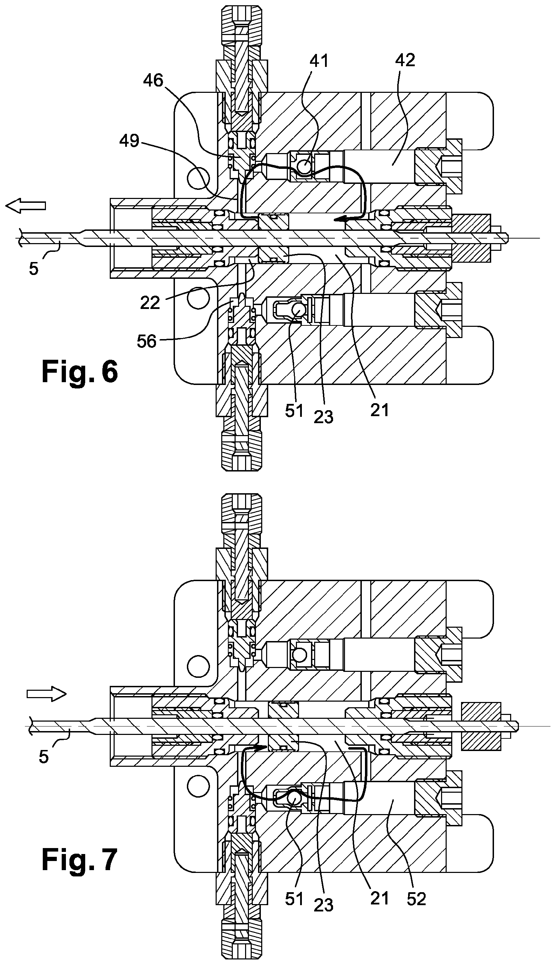

On notera que compte tenu de l'orientation du clapet anti-retour **45,** le fluide ne peut circuler par la première chambre intermédiaire **42** et le premier réducteur de débit **46.** La figure 6 illustre la configuration opposée dans laquelle l'extrémité avant du ski se déplace vers le bas, tirant par là-même le bras **5** vers l'avant. Dans ce cas, le piston **23** se déplace de telle sorte qu'il comprime le fluide contenu à la chambre de détente **22.** Le fluide circule alors par l'intermédiaire du canal **49** jusqu'au réducteur de débit **46.** Le clapet anti-retour **45** est alors ouvert, la bille **41** étant dégagée de l'orifice **44,** ce qui permet au fluide de transiter par la première chambre intermédiaire **42** et de regagner la chambre de compression **21.**

Il est à noter que compte tenu de la configuration du clapet anti-retour **55,** le second chemin hydraulique, passant par le second réducteur de débit **56** est fermé.

On note également que dans la configuration de la figure 6, le piston **23** vient en butée contre le bouchon **30,** bloquant ainsi la course du bras **5,** et l'excursion vers le bas de la spatule. En particulier, il est avantageux de positionner cette butée de telle façon que la course du bras soit bloquée lorsque la spatule retrouve sa position à plat sur la neige.

Le réducteur de débit **56** régule le débit du fluide et donc l'amortissement du ski dans le sens de la flexion, lors des mouvements de l'extrémité avant du ski vers le haut. A l'inverse, le réducteur de débit **46** régule le débit du fluide et donc l'amortissement du ski dans le sens de la contre-flexion, lors des mouvements de l'extrémité avant du ski vers le bas.

On notera que le réducteur de débit **46** est relativement faiblement fermé, et en tout cas moins que le réducteur de débit **56,** de sorte que l'amortissement du mouvement du bras dans cette direction est plus faible que dans la configuration illustrée à la figure 5.

En particulier, une configuration intéressante est de régler les réducteurs de débit de telle façon que l'amortissement du ski en flexion (correspondant à une action de la tige en compression sur l'amortisseur hydraulique) est de deux à trois fois plus grand que l'amortissement du ski en contre-flexion (correspondant à une action de la tige en détente sur l'amortisseur hydraulique), pour une même vitesse de sollicitation de l'amortisseur, de manière à obtenir un ski performant où la spatule reste inscrite sur sa trajectoire sur la neige sans décrochée de cette courbe par des vibrations parasites.

Par la suite, comme illustré à la figure 7, le bras **5** effectue, et déplace ainsi le piston **23** dans la chambre principale. La pression dans la chambre de compression **21** devient plus forte que celle qui règne dans la chambre de détente, et le chemin hydraulique par la chambre intermédiaire, le clapet anti-retour **55** et le réducteur de débit **56** est actif.

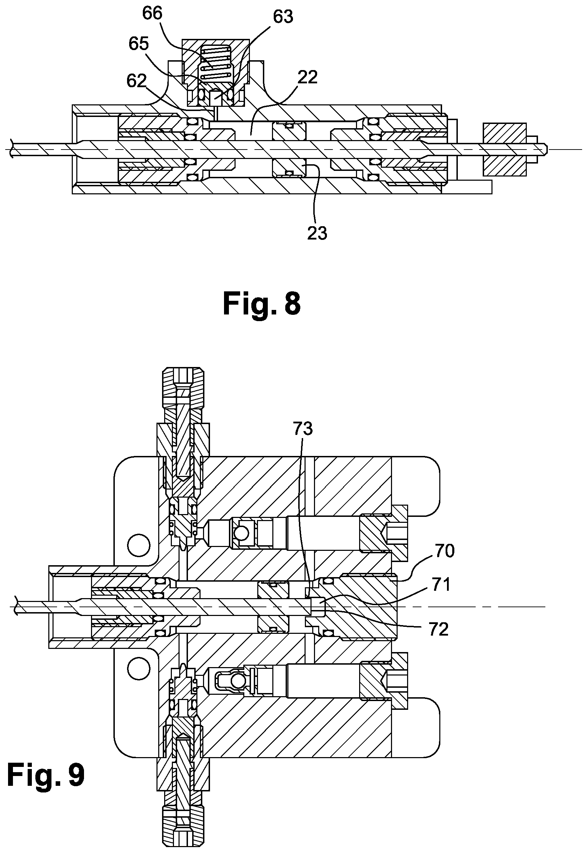

Dans une variante de réalisation illustrée à la figure 9, l'extrémité **72** du bras portant le piston pénètre dans un logement **71** formé dans le bouchon **70.** Ce logement présente un diamètre légèrement supérieur à celui de l'extrémité **72** du bras. De la sorte, le jeu **73** entre le bras et les parois du logement est réduit. Ainsi, lorsque le bras se déplace vers le fond du logement, il chasse le fluide par le faible jeu **73,** avec un effort de retenue augmenté, qui génère un effet de butée hydraulique.

Selon une autre caractéristique de l'invention, illustrée à la figure 8, la chambre de détente **22** est reliée par l'intermédiaire d'un canal **62** à une chambre de compensation **63.** Cette chambre de compensation **63** présente un volume variable, puisqu'elle est équipée d'un piston **65** apte à se déplacer vers le haut. Le piston **65** reçoit l'appui d'un ressort de rappel **66** qui est taré pour n'autoriser le déplacement du piston **66** que pour des niveaux de pression très élevés, correspondant à des phénomènes de dilatation ou de pression due en particulier à l'altitude. En effet, il est important que la chambre de compensation voit son volume varier uniquement pour des niveaux de pression très importants et non pas aux niveaux de pression variable observés lorsque la pression croît dans la chambre de détente à cause du déplacement du piston **23.**

En ce qui concerne les coefficients d'amortissement intéressants dans le domaine du ski, au niveau de la compression, ce taux est compris entre 0.2 et 1N/mm.s, tandis qu'au niveau de la détente il est compris entre 0.4 et 2 N/mm.s.

Bien entendu, différentes configurations géométriques peuvent être employées, et l'invention n'est pas limitée à la seule architecture illustrée aux figures. Ainsi, le réglage des pointeaux **48, 58** s'effectue aux figures 4 à 7 par un mécanisme à déplacement horizontal, avec un réglage de la position du pointeau par une vis latérale, mais il est également envisageable d'orienter le dispositif de réduction de débit selon un axe vertical, avec un réglage de la position du pointeau par une vis accessible par le haut.

De cette manière, la chambre de compensation a été prévue à la figure 8 en connexion avec la chambre de détente, mais il serait également possible de la connecter avec la chambre de compression.

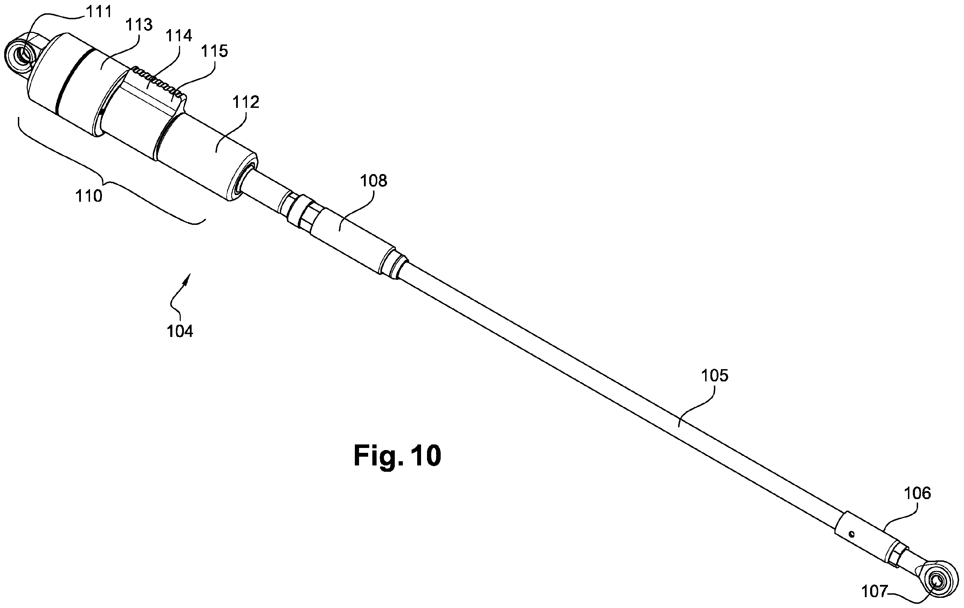

Les figures 10 à 13 illustrent un second mode de réalisation, dans lequel le dispositif hydraulique est réalisé selon une conception compacte, de forme générale cylindrique. Plus précisément, le dispositif **104** illustré à la figure 10 comporte principalement un bras **105** dont l'extrémité avant **106** est équipée d'un système d'accroche **107** formant une liaison pivot, destiné à être monté sur une platine analogue à la platine **7** de la figure 2. L'extrémité arrière **108** du bras **105** est relié au dispositif hydraulique **110** dont l'extrémité opposée **111** est équipée d'une liaison pivot permettant son montage sur la face supérieure du ski, par l'intermédiaire d'une platine analogue à la platine **11** de la figure 2.

Plus précisément, et comme illustré la figure 10, le dispositif hydraulique **110** comporte une première partie **112** formée d'un premier cylindre recevant l'extrémité du bras **105.** A proximité du point d'accroche **111,** le dispositif hydraulique **110** comporte un second cylindre, de plus fort diamètre **113,** renfermant une chambre complémentaire. Entre les deux cylindres **100** et **113** se trouve une pièce creuse rotative **114,** comportant une zone proéminente **115** actionnable manuellement permettant la mise en rotation du dispositif **114** autour de l'axe principal parallèle au bras **105.** Cette pièce rotative **114** renferme la chambre principale à l'intérieur duquel se déplace le piston **123** lié à l'extrémité **108** du bras **105**

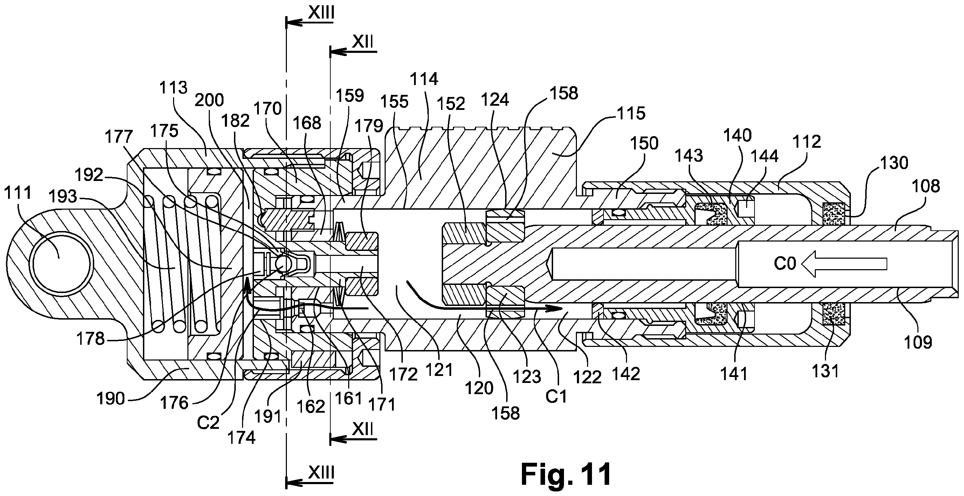

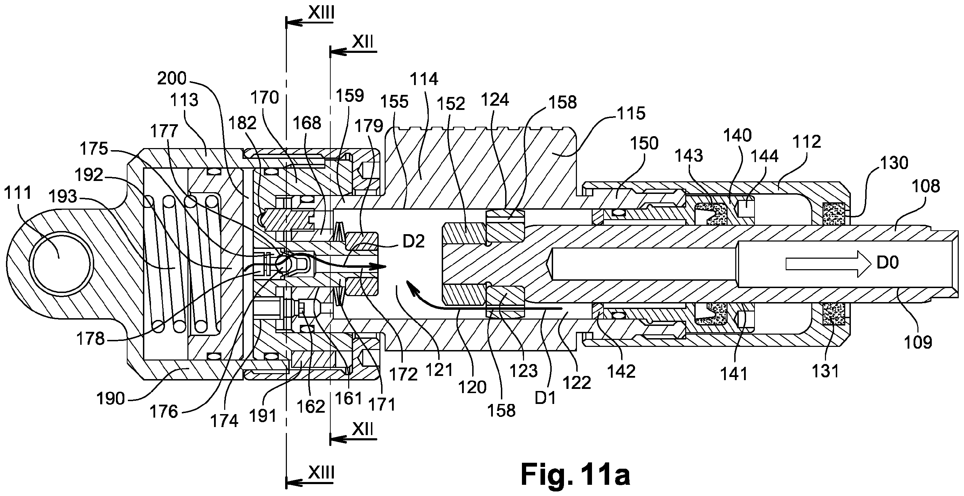

La constitution interne du dispositif hydraulique est essentiellement illustrée à la figure 11. Plus précisément, la pièce **112** comporte une ouverture **130,** équipée d'un joint d'étanchéité **131** permettant l'introduction de l'extrémité **108** du bras **105** à l'intérieur de l'amortisseur **110.** Plus précisément, l'extrémité **108** peut être montée par vissage sur de l'extrémité du bras **105** dans un logement taraudé **109** prévu à cet effet. Différents organes sont prévus à l'intérieur de la pièce **112** pour assurer un guidage de la bonne translation de la pièce **108,** combiné à une étanchéité optimale. Plus précisément, la pièce **112** est vissée sur l'extrémité **150** de la pièce rotative **114,** par un filetage extérieur de cette dernière. La pièce **112** recouvre la pièce **140,** qui comporte un évidement cylindrique **141** dans lequel peut coulisser l'extrémité **108,** grâce à l'aide d'un palier coulissant **142** de préférence en PTFE pour diminuer les frottements, combiné à un joint à lèvre circulaire **143** assurant l'étanchéité.

La face extérieure de la pièce **140** comporte un filetage permettant la coopération avec l'extrémité **150** de la pièce **114** rotative. Plus précisément, cette pièce **114** comporte un évidement central définissant la chambre principale **120,** à l'intérieur duquel peut coulisser le piston **123** monté en extrémité de la pièce **108.** Ce piston **123** est bloqué en translation par un écrou **152** sur la pièce **108** prolongeant le bras **105.** Le piston **123** présente sur sa face extérieure une forme assurant une bonne étanchéité par coulissement sur la surface interne **155** de l'évidement formant la chambre principale **120.** Un joint d'étanchéité circulaire peut également être prévu à cet effet.

De la sorte, la rotation de la pièce rotative **114** provoque la rotation des pièces qui en sont solidaires, et notamment les pièces **140** et **112.**

Comme illustré à la figure 11, le piston **123** est percé axialement de canaux **158** permettant de faire communiquer les deux chambres de volume variable définies à partir de la chambre principale **120,** de part et d'autre du piston **123.** Plus précisément, on définit la chambre de compression **121,** comme étant la chambre dans lequel la pression augmente lorsque le piston 123 s'enfonce à l'intérieur du dispositif hydraulique en direction de l'extrémité **111.** La chambre de détente **122** celle dans laquelle la pression augmente lorsque le piston se déplace avec un allongement du bras **105** en direction de l'extrémité du bras **106.**

L'extrémité opposée de la chambre principale **120** est obturée par la pièce **170,** qui vient se monter sur l'extrémité **159** de la pièce **114,** qui présente un évidement central **161** dans lequel est inséré le tube axial **171** de la pièce **170.** Ce tube **171** est creux, et définit un canal de passage **172** reliant la chambre de compression **121** avec un dispositif de clapets anti retour **175.** Le clapet anti-retour est formé par exemple d'une bille **176** et d'une portée sphérique **177** coopérant avec la bille **176** pour permettre le passage du fluide depuis le canal **178** formé sur la face externe de la pièce **170,** en direction du canal **172** relié à la chambre de compression **121.** Un écrou de serrage **179** associé à une rondelle compressible permet de bloquer la pièce **170** sur l'extrémité de la pièce rotative **114.** La pièce **170** est fixe par rapport au ski et la pièce rotative **114** tourne autour de la pièce**170**.

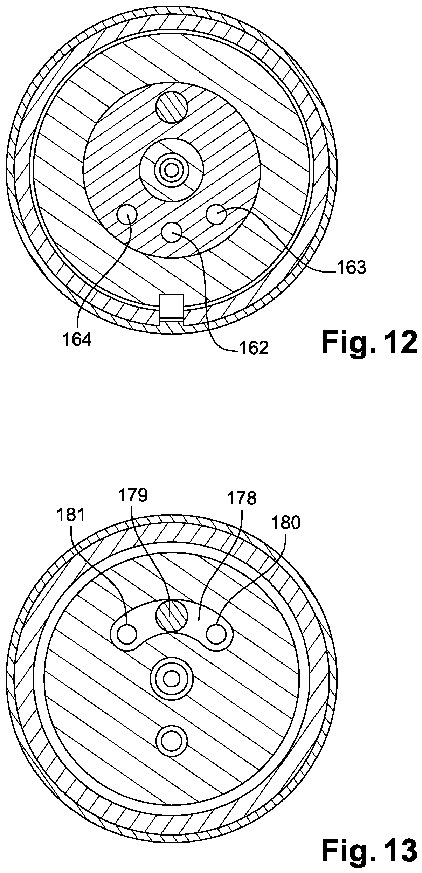

Complémentairement, l'extrémité **159** de la pièce rotative **114** comporte un évidement **162,** recevant une restriction hydraulique calibrée formant un réducteur de débit. Plus précisément, et comme illustré à la figure 12, l'extrémité **159** de la pièce rotative comporte trois évidements **162,163,164** décalés angulairement par rapport à l'axe de rotation de la pièce **114.** Ces trois évidements **162,163,164** reçoivent des restrictions hydrauliques de diamètres différents, allant typiquement de 0,25 0,55 mm.

La pièce **170** recouvrant l'extrémité de la portion **159** comporte également, comme illustré à la figure 13, une lumière en arc de cercle **178,** au fond duquel sont réalisés trois logements partiellement sphériques **179, 180, 181,** dans lesquels vient s'insérer un organe **182** d'indexation, solidaire de la pièce rotative **114.** De la sorte, lors du déplacement angulaire de la pièce rotative **114** par rapport au ski, et plus précisément par rapport à la pièce **170,** les différentes restrictions hydrauliques **162, 163 ,164** viennent à leur tour en regard de l'ouverture 174 communiquant avec la chambre complémentaire décrite ci-après. La position de la pièce **170** est indexée par la coopération entre l'organe 182 et les logements **179,180,181** dans lesquelles l'extrémité de la pièce **182** vient s'insérer, sous l'effet d'un moyen de rappel (non représenté).

La pièce **170** est recouverte par une pièce en cloche **190** à l'intérieur duquel elle est maintenue en position angulaire indexée par la cale **191.** La pièce en cloche **190** reçoit également un piston **192** et un ressort de rappel **193** fonctionnant en compression, et s'opposant au déplacement du piston **192** vers le fond de la pièce en cloche **190.** Le piston **192** définit à l'intérieur de la pièce en cloche **190,** et avec la face en regard de la pièce **170,** une chambre complémentaire **200,** reliée hydrauliquement avec la chambre de compression **121** par l'intermédiaire de la restriction hydraulique **162** et du clapet anti retour **175.** La pièce en cloche **190** est maintenue en position en liaison pivot par rapport au ski par l'intermédiaire de portion d'accrochage **111.**

En mode de fonctionnement normal, lorsque le bras **105,** et donc son extrémité se déplace selon la flèche **C0** en direction du point d'accrochage opposé **111,** sous l'effet d'une flexion du ski, le piston **113** se déplace en réduisant le volume de la chambre de compression **121.** Une partie du fluide contenu dans la chambre de compression **121** passe dans la chambre de détente **122** par l'intermédiaire des canaux hydrauliques **158** percés au travers du piston selon la flèche **C1.** Le volume déplacé par le piston **123** dans la chambre de compression **121** étant supérieur au volume déplacé dans la chambre de détente **122,** une partie du volume de la chambre de compression est repoussé dans la chambre complémentaire **200,** selon la flèche **C2** par l'intermédiaire de la restriction hydraulique **162** uniquement, la bille **176** obturant le clapet anti-retour **175.** Ceci provoque la compression du ressort **193,** et le déplacement du piston **192** vers le fond de la pièce en cloche **190.** Les pertes de charges générées par le passage du fluide dans la restriction hydraulique **162** provoquent une déperdition d'énergie, et ainsi l'amortissement du mouvement de flexion du ski.

A l'inverse, lorsque le ski subit une contre-flexion, et que le bras **105** se déplace (selon la flèche **D0**) de telle sorte que le piston diminue le volume de la chambre de détente **122,** le fluide présent dans la chambre de détente se déplace vers la chambre de compression **121** au travers des canaux hydrauliques **158,** selon la flèche **D1** de la figure 12. Parallèlement, du fluide est aspiré depuis la chambre complémentaire **200** vers la chambre de compression **121,** selon la flèche D2, très majoritairement par le clapet anti retour **175** qui n'est plus obturé par la bille **176,** et très partiellement par la restriction **162.** Il s'ensuit que les pertes de charges générées sont moindres que dans le mouvement opposé, et que l'amortissement est ainsi plus limité, dépendant des pertes de charge générées par les canaux hydrauliques **158** percés dans le piston **123.** Le ski a donc tendance à être moins amorti pour les phénomènes de contre flexion, et regagne donc plus rapidement la position au contact de la neige. Ainsi, les chemins hydrauliques actifs pendant les mouvements de flexion (flèches **C1 C2**) et de contre-flexion (flèches **D1+D2)** sont différents, le premier générant plus de pertes de charges, engendrant ainsi un plus fort amortissement.

Comme déjà évoqué, la pièce rotatif **114** formant la chambre principale **120** peut être déplacée angulairement par une action manuelle sur l'ailette **115,** de sorte que la restriction hydraulique en regard du passage **174** est remplacée par une restriction de plus fort ou de plus faible diamètre, générant ainsi des pertes de charge plus ou moins importantes, et ainsi un amortissement également différent pour les mouvements de flexion du ski. Bien entendu, le nombre de positions et leurs pertes de charges respectives peuvent être déclinés en fonction des performances d'amortissement souhaitées.

De même, d'autres mécanismes combinant deux chemins hydrauliques générant des pertes de charge différentes selon le sens de circulation du fluide peuvent être envisagés.

Bien entendu, le système amortisseur décrit ci-avant peut être installé à l'arrière de la fixation, pour limiter les mouvements du talon du ski.

Il ressort de ce qui précède que la planche conforme à l'invention présente un comportement avantageux, puisqu'il freine les mouvements de la spatule vers le haut du fait d'un amortissement important, pour éviter que la planche devienne plus difficilement contrôlable. Ceci se combine avec au contraire un retour rapide de la spatule vers sa position basse à proximité ou au contact de la neige, avec un amortissement plus faible.

Il s'ensuit que la planche est plus réactive et permet donc une conduite plus précise. La planche reste inscrite sur la trajectoire que l'utilisateur lui impose, et ainsi la carre de la planche reste ancrée dans la neige. La planche est donc plus rapide et plus performante.

## Revendications

1. Planche de glisse (1), équipée d'un système amortisseur des mouvements verticaux de la zone avant ou arrière de la planche, ledit système comprenant un bras (5) dont une première extrémité (6) est solidaire d'un point d'attache (7) localisé dans la zone avant ou arrière de la planche, et dont une deuxième extrémité (8) est solidaire d'un piston d'un dispositif hydraulique (10) relié à la planche à proximité de la fixation, ledit dispositif hydraulique (10) exerçant un effort de retenue lors du mouvement de la seconde extrémité (8) du bras afin de dissiper une partie de l'énergie cinétique de la zone avant ou arrière de la planche transmise par ledit bras (5), **caractérisée en ce que** lorsque le mouvement du bras (5) est consécutif à un mouvement du point d'attache vers le bas correspondant à un mouvement de contre-flexion de la planche, le dispositif hydraulique (10) exerce un effort de retenue qui est inférieur à celui qui est exercé lorsque le mouvement du bras (5) est consécutif à un mouvement du point d'attache vers le haut correspondant à un mouvement de flexion de la planche.

2. Planche de glisse selon la revendication 1, dans laquelle le point d'attache est localisé dans la zone avant, **caractérisée en ce que** le dispositif hydraulique est disposé à l'avant de la butée de la fixation (2).

3. Planche de glisse selon la revendication 1, **caractérisée en ce que** la première extrémité (6) est relié à la zone avant ou arrière du ski par une liaison pivot (9).

4. Planche de glisse selon la revendication 1, **caractérisée en ce que** le dispositif hydraulique (10) est relié au ski par une liaison pivot (11).

5. Planche de glisse selon la revendication 1, **caractérisée en ce que** le dispositif hydraulique inclut un organe de réglage de l'effort de retenue qui est exercé lors d'un mouvement de flexion de la planche

6. Planche de glisse selon la revendication 1, **caractérisée en ce que** le dispositif hydraulique comporte deux chemins hydrauliques différents générant des pertes de charge différentes, à savoir un premier circuit dans lequel le fluide contenu dans le dispositif hydraulique circule lors des mouvements de flexion de la planche, et un second circuit dans lequel le fluide contenu dans le dispositif hydraulique circule lors des mouvements de contre-flexion de la planche.

7. Planche de glisse selon la revendication 6, **caractérisée en ce que** le dispositif hydraulique (10) comporte une chambre principale (20), à l'intérieur de laquelle peut se déplacer le piston (23), ledit piston séparant ladite chambre principale en une chambre de compression (21) et une chambre de détente (22), et deux chemins hydrauliques indépendants connectant les chambres de compression (21) et de détente (22), les deux chemins ayant des sens de circulation opposés et générant des pertes de charge différentes.

8. Planche de glisse selon la revendication 7, **caractérisée en ce que** les chemins hydrauliques comportent chacun un clapet anti-retour (45,55), les deux clapets étant montés en sens opposés.

9. Planche de glisse selon la revendication 7, **caractérisée en ce que** les deux chemins hydrauliques comportent chacun un réducteur de débit (46,56), les deux réducteurs de débit étant de section différentes.

10. Planche de glisse selon la revendication 9, **caractérisée en ce que** les réducteurs de débit incluent un pointeau (47,57), dont la position (47,57) est réglable.

11. Planche de glisse selon la revendication 1, **caractérisée en ce que** le dispositif hydraulique (110) comporte
- une chambre principale (120), à l'intérieur de laquelle peut se déplacer le piston (123), ledit piston séparant ladite chambre principale en une chambre de compression (121) et une chambre de détente (122), ledit piston étant percé par au moins un canal hydraulique (158) reliant les chambres de compression et de détente ;
- une chambre complémentaire de volume variable, reliée à la chambre de compression par un clapet anti retour et une restriction hydraulique.

12. Planche de glisse selon la revendication 11, **caractérisée en ce que** il comporte un mécanisme permettant de régler le diamètre de la restriction hydraulique.

13. Planche de glisse selon la revendication 7 ou 11, **caractérisée en ce que** la chambre principale (20) est reliée à une chambre de compensation (63) agencée pour recevoir le fluide de la chambre principale se dilatant.

14. Planche de glisse selon la revendication 1, **caractérisée en ce que** le système amortisseur comporte des moyens de limitation de la course du bras en cas de mouvement du point d'attache vers le bas.

15. Planche de glisse selon la revendication 14, **caractérisée en ce que** les moyens de limitation comportent une butée montée sur le bras, et est apte à venir au contact d'une portion fixe du dispositif hydraulique.

## Patentansprüche

1. Gleitbrett (1), das mit einem System zur Dämpfung der vertikalen Bewegungen des vorderen und hinteren Bereichs des Bretts ausgestattet ist, wobei das System einen Arm (5) umfasst, von dem ein erstes Ende (6) mit einem Befestigvmgsspumkt (7) fest verbunden ist, der im vorderen oder hinteren Bereich des Bretts angeordnet ist, und von dem ein zweites Ende (8) mit einem Kolben einer hydraulischen Vorrichtung (10) fest verbunden ist, die mit dem Brett in der Nähe der Bindung verbunden ist, wobei die Hydraulikvorrichtung (10) eine Rückhaltewirkung bei einer Bewegung des zweiten Endes (8) des Arms ausübt, um einen Teil der kinetischen Energie des hinteren oder vorderen Bereichs des Bretts, die durch den Arm (5) übertragen wird, abzuführen, **dadurch gekennzeichnet, dass**, wenn die Bewegung des Arms (5) einer Bewegung des Befestigungspunktes nach unten entsprechend einer Rückbiegebewegung des Bretts folgt, die Hydraulikvorrichtung (10) eine Rückhaltewirkung ausübt, die geringer ist als diejenige, die ausgeübt wird, wenn die Bewegung des Arms (5) einer Bewegung des Befestigungspunktes nach oben entsprechend der Biegebewegung des Bretts folgt.

2. Gleitbrett nach Anspruch 1, wobei der Befestigungspunkt im vorderen Bereich angeordnet ist, **dadurch gekennzeichnet, dass** die Hydraulikeinrichtung vor dem Anschlag der Bindung (2) angeordnet ist.

3. Gleitbrett nach Anspruch 1, **dadurch gekennzeichnet, dass** das erste Ende (6) mit einem vorderen oder hinteren Bereich des Skis durch eine Schwenkverbindung (9) verbunden ist.

4. Gleitbrett nach Anspruch 1, **dadurch gekennzeichnet, dass** die Hydraulikvorrichtung (10) mit dem Ski durch eine Schwenkverbindung (11) verbunden ist.

5. Gleitbrett nach Anspruch 1, **dadurch gekennzeichnet, dass** die Hydraulikvorrichtung ein Element zur Regelung der Rückhaltewirkung, die bei einer Biegebewegung des Bretts ausgeübt wird, enthält.

6. Gleitbrett nach Anspruch 1, **dadurch gekennzeichnet, dass** die Hydraulikvorrichtung zwei unterschiedliche Hydraulikpfade umfasst, die verschiedene Druckverluste erzeugen, nämlich einen ersten Kreislauf, in dem das in der Hydraulikvorrichtung enthaltene Fluid bei den Biegebewegungen des Bretts zirkuliert, und einen zweiten Kreislauf, in dem das in der Hydraulikvorrichtung enthaltene Fluid bei den Rückbiegebewegungen des Bretts zirkuliert.

7. Gleitbrett nach Anspruch 6, **dadurch gekennzeichnet, dass** die Hydraulikvorrichtung (10) eine Hauptkammer (20) umfasst, innerhalb derer sich der Kolben (23) bewegen kann, wobei der Kolben die Hauptkammer in eine Kompressionskammer (21) und eine Expansionskammer (22) trennt, und zwei unabhängige Hydraulikpfade die Kompressionskammer (21) und die Expansionskammer (22) verbinden, wobei die beiden Pfade entgegengesetzte Bewegungsrichtungen aufweisen und unterschiedliche Druckverluste erzeugen.

8. Gleitbrett nach Anspruch 7, **dadurch gekennzeichnet, dass** die Hydraulikpfade jeweils ein Rückschlagventil (45,55) umfassen, wobei die beiden Ventile in entgegengesetzten Richtungen befestigt sind.

9. Gleitbrett nach Anspruch 7, **dadurch gekennzeichnet, dass** die beiden Hydraulikpfade jeweils einen Durchflussbegrenzer (46,56) umfassen, wobei die beiden Durchflussbegrenzer unterschiedliche Querschnitte aufweisen.

10. Gleitbrett nach Anspruch 9, **dadurch gekennzeichnet, dass** die Durchflussbegrenzer eine Nadel (47,57) aufweisen, deren Position (47,57) einstellbar ist.

11. Gleitbrett nach Anspruch 1, **dadurch gekennzeichnet, dass** die Hydraulikvorrichtung (110) umfasst
- eine Hauptkammer (120), innerhalb derer sich der Kolben (123) bewegen kann, wobei der Kolben die Hauptkammer in eine Kompressionskammer (121) und eine Expansionskammer (122) trennt, wobei der Kolben durch mindestens einen hydraulischen Kanal (158), der die Kompressionskammer und die Expansionskammer verbindet, durchbrochen wird;
- eine ergänzende Kamner mit variablem Volumen, die mit der Kompressionskammer über ein Rückschlagventil und einen Hydraulikschieber verbunden ist.

12. Gleitbrett nach Anspruch 11, **dadurch gekennzeichnet, dass** es einen Mechanismus zur Regulierung des Durchmessers des Hydraulikschieber umfasst.

13. Gleitbrett nach Anspruch 7 oder 11, **dadurch gekennzeichnet, dass** die Hauptkammer (20) mit einer Ausgleichskammer (63) verbunden ist, die angeordnet ist, um das sich ausdehnende Fluid der Hauptkammer aufzunehmen.

14. Gleitbrett nach Anspruch 1, **dadurch gekennzeichnet, dass** das Dämpfungssystem Mittel zur Begrenzung der Bewegung des Arms bei Bewegung des Befestigungspunktes nach unten umfasst.

15. Gleitbrett nach Anspruch 14, **dadurch gekennzeichnet, dass** die Begrenzungsmittel einen Anschlag umfassen, der auf dem Arm angeordnet ist und in der Lage ist, mit einem festen Abschnitt der Hydraulikvorrichtung in Kontakt zu treten.

## Claims

1. Gliding board (1) with a vertical movement damping system in the front or rear zone of the board, said system including an arm (5) the first end (6) of which is integral with an attaching point (7) located in the front or rear zone of the board and whose second end (8) is integral with the piston of a hydraulic device (10) connected to the board near the attachment, said hydraulic device (10) applying a retaining force during the movement of the second end (8) of the arm in order to dissipate part of the kinetic energy from the front or rear zone of the board transmitted by said arm (5) **characterised in that,** when the movement of the arm (5) is consecutive to a downward movement of the attaching point corresponding to a counter-bending movement of the board, the hydraulic device (10) applies a retaining force which is less than the force applied when the movement of the arm (5) is consecutive to a movement of the attaching point upwards, corresponding to a board bending movement.

2. Gliding board according to claim a 1 in which the attaching point is located in the front zone, **characterised in that** the hydraulic device is placed in front of the attaching stop (2).

3. Gliding board according to claim 1, **characterised in that** the first end (6) is connected to the front or rear zone of the ski by a swivelling link (9).

4. Gliding board according to claim 1, **characterised in that** the hydraulic device (10) is connected to the ski by a swivelling link (11).

5. Gliding board according to claim 1, **characterised in that** the hydraulic device includes a system for adjusting the retaining force generated during the bending movements of the board.

6. Gliding board according to claim 1, **characterised in that** the hydraulic device includes two different hydraulic paths generating different load losses, that is, a first circuit in which the fluid contained in the hydraulic device circulates during the board bending movements and a second circuit in which the fluid contained in the hydraulic device circulates during the counter-bending movements of the board.

7. Gliding board according to claim 6, **characterised in that** the hydraulic device (10) includes a main chamber (20) inside which piston (23) can move with said piston dividing said main chamber into a compression chamber (21) and a relief chamber (22) and two independent hydraulic paths connecting the compression chamber (21) and relief chamber (22) with the two paths working in opposite circulating directions and generating different load losses.

8. Sliding board according to claim 7 **characterised in that** the hydraulic paths each have an anti-return valve (45, 55) with the two valves mounted in opposite directions.

9. Gliding board according to claim 7, **characterised in that** the two hydraulic paths each have a flow reducer (46, 56) with the two flow reduces having different sections.

10. Gliding board according to claim 9, **characterised in that** the flow reduces include a grub screw (47, 57) whose position (47, 57) is adjustable.

11. Gliding board according to claim 1, **characterised in that** the hydraulic device (110) includes
- a main chamber (120) inside which the piston (123) can move, said piston dividing the main chamber into a compression chamber (121) and a relief chamber (122), said piston being drilled with at least one hydraulic channel (158) connecting the compression and relief chambers;
- a complementary chamber having a variable volume connected to the compression chamber by an anti-return valve and a hydraulic restriction.

12. Gliding board according to claim 11, **characterised in that** it has a mechanism for adjusting the diameter of the hydraulic restriction.

13. Gliding board according to claim 7 or 11, **characterised in that** the main chamber (20) is connected to a compensation chamber (63) arranged to receive the fluid from the main chamber when it expands.

14. Gliding board according to claim 1, **characterised in that** the damping system includes means of limiting the stroke of the arm in the event of the attaching point moving downward.

15. Gliding board according to claim 14, **characterised in that** the limiting means include a stop mounted on the arm, and which is suitable for coming into contact with a fixed portion of the hydraulic device.
